# EUROPEAN PATENT APPLICATION

(11) **EP 3 838 990 A1**
(43) Date of publication of application: **23.06.2021**
(21) Application number: 19383163.3
(22) Date of filing: 20.12.2019
(51) Int. Cl.: C08L 95/00, C08L 23/00, C08L 23/08

(54) **A BITUMEN COMPOSITION INCLUDING RECYCLED SYNTHETIC TURF, AND METHOD FOR MAKING SAME**

(71) Applicant: DOW GLOBAL TECHNOLOGIES LLC, Midland, MI 48674 (US)
(72) Inventor: VACIN, Otakar, Prague 2 12000 (CZ); ALVAREZ, Eduardo, 43006 Tarragona (ES); LOPEZ, David, 43006 Tarragona (ES)
(74) Representative: Elzaburu S.L.P.

(57) **Abstract**

Provided are a bitumen composition, and a method of making the bitumen composition. The bitumen composition includes a bitumen base, a plurality of synthetic turf fragments, and a modification agent, wherein the modification agent is a reactive thermoplastic interpolymer. The method of making the bitumen composition comprises mixing the bitumen base, the plurality of synthetic turf fragments, and the modification agent.

## Description

### TECHNICAL FIELD

Embodiments of the present disclosure generally relate to a bitumen composition that includes a plurality of synthetic turf fragments. More particularly, embodiments of the present disclosure generally relate to a bitumen composition that includes a bitumen base, a plurality of synthetic turf fragments, and a modification agent, and methods for making the bitumen composition.

### BACKGROUND

Post-consumer recycled and post-industrial recycled materials are a significant part of environmental sustainability initiatives and efforts in today's world. Bitumen, also known as asphalt, may incorporate recycled materials and may be used in a variety of materials, including, for example, construction, pavement, and roofing materials. Several factors may impact the performance of bitumen, including, for example, sustainability considerations, and problems exist with producing a sustainable bitumen composition that has optimal performance characteristics.

Synthetic turfs also play an important role in sustainability efforts. For example, synthetic turfs may be a sustainable alternative to natural grass and may be used for landscaping, athletic fields, dog runs, and playgrounds. While synthetic turfs may be a sustainable alternative, they nonetheless have a limited useful life. Methods of recycling synthetic turfs are known in the art and include grinding or extruding synthetic turfs. Problems, however, exist with the complexity and costs of the methods of recycling synthetic turfs and including ground or extruded synthetic turf into next-use applications.

Therefore, there is a need for a sustainable and improved bitumen composition that incorporates synthetic turf, and an improved method for making the bitumen composition.

### SUMMARY

Disclosed herein is a bitumen composition. In embodiments, the bitumen composition comprises a bitumen base in about 70 weight % to about 99.8 weight %, based on total weight of the bitumen composition; a plurality of synthetic turf fragments in about 0.10 weight % to about 20 weight %, based on total weight of the bitumen composition; a modification agent in about 0.10 weight % to about 10 weight %, based on total weight of the bitumen composition, wherein the modification agent is a reactive thermoplastic interpolymer. In further embodiments, the reactive thermoplastic interpolymer comprises from 0.1 to about 25 weight % glycidyl methacrylate.

In embodiments, the reactive thermoplastic interpolymer is an epoxy-functionalized ethylene copolymer having the formula E/X/Y/Z, wherein E is the copolymer unit -(CH₂CH₂)- derived from ethylene; X is the copolymer unit -(CH₂CR¹R²)-, where R¹ is hydrogen, methyl, or ethyl, and R² is carboalkoxy, acyloxy, or alkoxy of 1 to 10 carbon atoms, present in from 0 to about 40 weight % of the copolymer; Y is the copolymer unit -(CH₂CR³R⁴)-, where R³ is hydrogen or methyl, and R⁴ is carboglycidoxy or glycidoxy, present in from 0.1 to about 25 weight % of the copolymer; Z is the copolymer derived from comonomers including carbon monoxide, sulfur dioxide, acrylonitrile, or other monomers, present in from 0 to about 10 weight % of the copolymer. In further embodiments, Y is selected from the group consisting of glycidyl acrylate, glycidyl methacrylate, glycidyl butyl acrylate, glycidyl vinyl ether, and combinations of two or more of glycidyl acrylate, glycidyl methacrylate, glycidyl butyl acrylate, and glycidyl vinyl ether.

In embodiments, the reactive thermoplastic interpolymer is an epoxy-functionalized copolymer having a melt index (12) from 5 g/10 min to 15 g/10 min, when measured according to ASTM D1238 (2.16 kg, 190°C). In other embodiments, the bitumen composition further comprises one or more of the following: (1) an acid; (2) an anhydride; (3) bitumen softeners; (4) amines; (5) ethylene vinyl acetate; (6) styrene butadiene styrene; and (7) styrene/conjugated diene copolymer. In embodiments, the bitumen composition further comprises polyphosphoric acid. In even further embodiments, the bitumen composition further comprises from about 0.05 to about 1 weight % of an acid or anhydride, based on the total weight of the bitumen composition. In embodiments, the reactive thermoplastic interpolymer of the bitumen composition has a density from about 0.900 g/cc to about 0.970 g/cc, and the bitumen composition has an elastic recovery of from 30% to 90% and comprises from about 0.10 weight % to about 10 weight % of the plurality of synthetic turf fragments and from about 0.25 weight % to about 1.25 weight % of the reactive thermoplastic interpolymer.

Also disclosed herein is a method of making a bitumen composition. In embodiments, the method of making the bitumen composition comprises mixing a bitumen base, a plurality of synthetic turf fragments, and a modification agent, wherein the modification agent is a reactive thermoplastic interpolymer.

Additional features and advantages of the embodiments will be set forth in the detailed description which follows, and in part will be readily apparent to those skilled in the art from that description or recognized by practicing the embodiments described herein, including the detailed description and the claims.

### DETAILED DESCRIPTION

Specific embodiments of the present application will now be described. These embodiments are provided so that this disclosure will be thorough and complete and will fully convey the scope of the subject matter to those skilled in the art.

The term "polymer" refers to a polymeric compound prepared by polymerizing monomers, whether of a same or a different type. The generic term polymer thus embraces the term "homopolymer," which usually refers to a polymer prepared from only one type of monomer as well as "copolymer," which refers to a polymer prepared from two different monomers. The term "interpolymer," as used herein, refers to a polymer prepared by the polymerization of two or more different types of monomers. The generic term interpolymer thus includes a copolymer or polymer prepared from more than two different types of monomers, such as terpolymers. The terms "polyethylene" or "ethylene-based polymer" refer to polymers comprising greater than 50% by mole of units derived from ethylene monomer. This includes ethylene-based homopolymers or copolymers (meaning units derived from two or more comonomers). Common forms of ethylene-based polymers known in the art include, but are not limited to, Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

The term "LLDPE," includes resin made using Ziegler-Natta catalyst systems as well as resin made using single-site catalysts, including, but not limited to, bis-metallocene catalysts (sometimes referred to as "m-LLDPE"), phosphinimine, and constrained geometry catalysts, and resins made using post-metallocene, molecular catalysts, including, but not limited to, bis(biphenylphenoxy) catalysts (also referred to as polyvalent aryloxyether catalysts). LLDPE includes linear, substantially linear, or heterogeneous ethylene-based copolymers or homopolymers. LLDPEs contain less long chain branching than LDPEs and include the substantially linear ethylene polymers, which are further defined in U.S. Patent No. 5,272,236, U.S. Patent No. 5,278,272, U.S. Patent No. 5,582,923 and U.S. Patent No. 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and blends thereof (such as those disclosed in U.S. Patent No. 3,914,342 and U.S. Patent No. 5,854,045). The LLDPE resins can be made via gas-phase, solution-phase, or slurry polymerization or any combination thereof, using any type of reactor or reactor configuration known in the art.

The term "HDPE" refers to ethylene-based polymers having densities greater than about 0.940 g/cc, which are generally prepared with Ziegler-Natta catalysts, chrome catalysts or even metallocene catalysts.

The terms "bitumen" or "bitumen base" refers to a complex mixture that may be separated into two major fractions of hydrocarbons, asphaltenes and maltenes. The asphaltenes may be polycyclic aromatics and may contain polycyclic aromatics that mostly have polar functionality. One or more of the following functionalities may be present: carboxylic acids, amines, sulfides, sulfoxides, sulfones, sulfonic acids, porphyrins, porphyrin derivatives, metalloporphyrins or metalloporphyrin derivatives comprising cations of vanadium, nickel or iron. The maltene phase may contain polar aromatics, aromatics, and naphthene. Without being bound by theory, it is generally believed that bitumen may be a colloidal dispersion with the asphaltenes dispersed in the maltenes and the polar aromatics may function as dispersing agents. The asphaltenes may be relatively high in molecular weight (about 1500 daltons) as compared with the other components of bitumen. The asphaltenes may be amphoteric in nature and form aggregates through self-association that offer some viscoelastic behavior to bitumen. Asphaltenes may vary in amount and functionality depending on the crude source from which the bitumen is derived. Specific examples of suitable crude bitumens may include Ajax, Marathon, Wyoming Sour, Mayan, Venezuelan, Canadian, Arabian, Trinidad Lake, Salamanca and combinations of two or more thereof.

The term "about" as used herein serves to reasonably encompass or describe minor variations in numerical values measured by instrumental analysis or as a result of sample handling. Such minor variations may be in the order of ±0-25, ±0-10, ±0-5, or ±0-2.5, % of the numerical values. Further, the term "about" applies to both numerical values when associated with a range of values. Moreover, the term "about" may apply to numerical values even when not explicitly stated.

Reference will now be made in detail to embodiments of bitumen compositions and of methods of making the bitumen compositions as described herein.

In embodiments, the bitumen composition includes a bitumen base. The bitumen base may be saturated and unsaturated hydrocarbons (e.g., aliphatic and aromatic hydrocarbons) and may include one or more asphaltenes; heterocyclic compounds containing sulphur, nitrogen, and oxygen; and trace amounts of metals such as iron, nickel, and vanadium. In some embodiments, the bitumen base may be commercially-available.

In embodiments, the bitumen composition includes a bitumen base in about 70 weight percent (wt.%) to about 99.8 wt.%, based on the total weight of the bitumen composition. All individual values and subranges of from about 70 weight percent (wt.%) to about 99.8 wt.% are included and disclosed herein. For example, in one or more embodiments, the bitumen composition may include from about 70 wt.% to about 99.8 wt.%, from about 70 wt.% to about 95 wt.%, from about 70 wt.% to about 90 wt.%, from about 70 wt.% to about 85 wt.%, from about 70 wt.% to about 80 wt.%, from about 70 wt.% to about 75 wt.%, from about 75 wt.% to about 99.5 wt.%, from about 75 wt.% to about 95 wt.%, from about 75 wt.% to about 90 wt.%, from about 75 wt.% to about 85 wt.%, from about 75 wt.% to about 80 wt.%, from about 80 wt.% to about 99.5 wt.%, from about 80 wt.% to about 95 wt.%, from about 80 wt.% to about 90 wt.%, from about 80 wt.% to about 85 wt.%, from about 85 wt.% to about 99.5 wt.%, from about 85 wt.% to about 95 wt.%, from about 85 wt.% to about 90 wt.%, from about 90 wt.% to about 99.5 wt.%, from about 90 wt.% to about 95 wt.%, or from about 95 wt.% to about 99.8 wt.% bitumen base, based on the total weight of the bitumen composition.

In embodiments, the bitumen composition includes a plurality of synthetic turf fragments. The term "synthetic turf' refers to any form of artificial grass or turf conventionally used in athletic playing surfaces such as football, baseball, and lacrosse fields, and in other applications where an alternative to natural grass is desired. These applications include, for example, playgrounds, running paths, lawns, dog runs, tennis courts, and miniature golf putting greens. In embodiments, the synthetic turf may be a virgin synthetic turf. In other embodiments, the synthetic turf may be a recycled synthetic turf. A "synthetic turf fragment" refers to a part or a fragment of synthetic turf that may be incorporated into the bitumen composition as disclosed herein. "A plurality of synthetic turf fragments" refers to two or more synthetic turf fragments that may be incorporated into the bitumen composition as disclosed herein. The plurality of synthetic turf fragments may include polyethylene, polypropylene, nylon, polyester terephthalate, styrene butadiene latex, polyurethane, infill material, or additives. For example, in one or more embodiments, the plurality of synthetic turf fragments may come from a synthetic turf reduced in size that comprised filaments made of LLDPE, UV additives, and color pigments, a primary backing made of polypropylene, and a secondary backing made of styrene butadiene latex. In other embodiments, the plurality of synthetic turf fragments may come from a synthetic turf reduced in size that comprised infill material made of ground tire rubber, filaments made of polyethylene and polypropylene, a primary backing made of polypropylene and polyester terephthalate, and a secondary backing made of polyurethane.

In embodiments, the plurality of synthetic turf fragments may include no infill material (e.g., post-industrial synthetic turf often contains no infill material). In other embodiments, the plurality of synthetic turf fragments may include infill material. Infill material may include materials such as sand, ground tire rubber, styrene-butadiene rubber (SBR), ethylene propylene diene monomer rubber (EPDM), thermoplastic elastomers (TPE), organic material (e.g., cork) or mixtures thereof. Certain infill material may not react with the bitumen base or with the modification agent described herein, and so may be included in the bitumen composition as a diluent. Those skilled in the art will appreciate that removing part or all of the infill material prior to forming the bitumen composition, although not necessarily required, may assist with the transportation of the synthetic turf and may assist with the mixing of the plurality of synthetic turf fragments with the modification agent and bitumen base, depending on the amount and constituents of the infill material. In some embodiments, to produce the bitumen composition, the plurality of synthetic turf fragments may include up to 70 weight percent (wt.%) infill material. All individual values and subranges of up to 70 wt.% of infill material are disclosed and included herein. For example, in one or more embodiments, the plurality of synthetic turf fragments may comprise up to 65 wt.%, up to 60 wt.%, up to 55 wt.%, up to 50 wt.%, up to 40 wt.%, up to 30 wt.%, or up to 20 wt.% of infill material. In other embodiments, the plurality of synthetic turf fragments may comprise from 0.01 wt.% to 70wt.%, from 0.1 wt.% to 70 wt.%, from 0.5 wt.% to 70 wt.%, from 1 wt.% to 70 wt.%, from 10 wt.% to 70 wt.%, 20 wt.% to 70 wt.%, from 0.01 wt.% to 60 wt.%, from 0.1 wt.% to 60 wt.%, from 0.5 wt.% to 60 wt.%, from 1 wt.% to 60 wt.%, from 10 wt.% to 60 wt.%, from 20 wt.% to 60 wt.%, from 0.01 wt.% to 50 wt.%, from 0.1 wt.% to 50 wt.%, from 0.5 wt.% to 50 wt.%, from 1 wt.% to 50 wt.%, from 10 wt.% to 50 wt.%, from 20 wt.% to 50 wt.%, from 0.01 wt.% to 40 wt.%, from 0.1 wt.% to 40 wt.%, from 0.5 wt.% to 40 wt.%, from 1 wt.% to 40 wt.%, from 10 wt.% to 40 wt.%, from 20 wt.% to 40 wt.%, from 0.01 wt.% to 30 wt.%, from 20 wt.% to 30 wt.%, from 30 wt.% to 70 wt.%, from 30 wt.% to 60 wt.%, from 30 wt.% to 50 wt.%, from 30 wt.% to 40 wt.%, from 40 wt.% to 70 wt.%, from 40 wt.% to 60 wt.%, from 40 wt.% to 50 wt.%, from 50 wt.% to 70 wt.%, from 50 wt.% to 60 wt.%, or from 60 wt.% to 70 wt.% of infill material, based on the total weight of the plurality of synthetic turf fragments.

In embodiments, the bitumen composition may include a plurality of synthetic turf fragments in about 0.10 weight percent (wt.%) to about 20 wt.%, based on the total weight of the bitumen composition. All individual values and subranges of from about 0.10 to about 20 wt.% are disclosed and included herein. For example, in one or more embodiments, the bitumen composition may include from about 0.10 to about 20 wt.%, from about 0.10 to about 15 wt.%, from about 0.10 to about 10 wt.%, from about 0.10 to about 5 wt.%, from about 0.10 to about 1 wt.%, from about 1 to about 20 wt.%, from about 1 to about 15 wt.%, from about 1 to about 10 wt.%, from about 1 to about 5 wt.%, from about 5 to about 20 wt.%, from about 5 to about 15 wt.%, from about 5 to about 10 wt.%, from about 10 to about 20 wt.%, from about 10 to about 15 wt.%, or from about 15 to about 20 wt.% plurality of synthetic turf fragments, based on the total weight of the bitumen composition.

In embodiments, the bitumen composition includes a modification agent. In embodiments, the bitumen composition may include the modification agent in about 0.10 weight percent (wt.%) to about 10 weight percent, based on the total weight of the bitumen composition. All individual values and subranges of from about 0.10 wt.% to about 10 wt.% are disclosed and included herein. For example, in one or more embodiments, the bitumen composition may include from about 0.10 wt.% to about 5 wt.%, from about 0.10 wt.% to about 3 wt.%, from about 0.1 wt.% to about 1.25 wt.%, from about 0.10 wt.% to about 1 wt.%, from about 0.10 wt.% to about 0.50 wt.%, from about 0.25 wt.% to about 10 wt.%, from about 0.25 wt.% to about 5 wt.%, from about 0.25 wt.% to about 3 wt.%, from about 0.25 wt.% to about 1.25 wt.%, from about 0.25 wt.% to about 1. wt.%, from about 0.5 wt.% to about 10 wt.%, from about 0.5 wt.% to about 5 wt.%, from about 0.5 wt.% to about 1 wt.%, from about 1 wt.% to about 10 wt.%, from about 1 wt.% to about 5 wt.%, or from about 5 wt.% to about 10 wt.% modification agent, based on the total weight of the bitumen composition.

In embodiments, the modification agent is a reactive thermoplastic interpolymer. The reactive thermoplastic interpolymer may be a thermoplastic interpolymer graft modified or copolymerized with a functional group that is reactive with part of or all the other constituents of the bitumen base. In embodiments, the backbone of the thermoplastic interpolymer may include polymers of polypropylene, acrylate, high density polyethylene (HDPE), low density polyethylene (LDPE), linear low density polyethylene (LLDPE), ethylene-vinyl acetate (EVA), or polypropylene random copolymer. In embodiments, the reactive thermoplastic interpolymer may include a thermoplastic interpolymer copolymerized or graft modified with maleic anhydride, glycidyl acrylate, glycidyl methacrylate, glycidyl butyl acrylate, glycidyl vinyl ether, or mixtures thereof. In further embodiments, the reactive thermoplastic interpolymer may include ethylene-ethyl acrylate (EEA) copolymer, ethylene-methyl acrylate (EMA) copolymer, ethylene-butyl acrylate (EBA) copolymer, or acrylic acid modified copolymers.

In embodiments, the reactive thermoplastic interpolymer is an epoxy-functionalized ethylene copolymer. In embodiments, the reactive thermoplastic interpolymer may include from about 0.1 to about 25 weight (wt.%) glycidyl methacrylate. All individual values and subranges of from about 0.1 to about 25 wt.% are disclosed and included herein. For example, in one or more embodiments, the reactive thermoplastic interpolymer may include from about 0.1 to about 20 wt.%, from about 0.1 to about 15 wt.%, from about 0.1 to about 10 wt.%, from about 0.1 to about 5 wt.%, from about 1 to about 15 wt.%, from about 1 to about 10 wt.%, from about 1 to about 5 wt.%, from about 5 to about 15 wt.%, from about 5 to about 10 wt.%, from about 6 to about 10 wt.%, from about 4 to about 9 wt.%, or from about 6 to about 9 wt.% glycidyl methacrylate, based on the total weight percent of the reactive thermoplastic interpolymer.

In embodiments, the reactive thermoplastic interpolymer may have a density of from about 0.900 grams per cubic centimeter (g/cc) to about 0.970 g/cc. All individual values and subranges between 0.900 g/cc to about 0.970 g/cc are disclosed and included herein. For example, in one or more embodiments, the reactive thermoplastic interpolymer may have a density of from 0.900 g/cc to about 0.970 g/cc, from about 0.900 g/cc to about 0.960 g/cc, from about 0.910 g/cc to about 0.960 g/cc, from about 0.910 g/cc to about 0.955 g/cc, from about 0.920 g/cc to about 0.960 g/cc, from about 0.920 g/cc to about 0.955 g/cc, from about 0.930 g/cc to about 0.970 g/cc, or from about 0.920 g/cc to about 0.955 g/cc. Density may be measured according to ASTM D792.

In embodiments, the epoxy-functionalized ethylene copolymer may be represented by the formula E/X/Y/X, which includes copolymer units E, X, Y, and Z.

In embodiments, E may be a copolymer unit -(CH₂CH₂)- derived from ethylene.

In embodiments, X may be a copolymer unit -(CH₂CR¹R²)-. In some embodiments, R¹ may be hydrogen, methyl, or ethyl. In some embodiments, R² is carboalkoxy, acyloxy, or alkoxy of 1 to 10 carbon atoms. In further embodiments, the epoxy-functionalized ethylene copolymer may include from about 0 wt.% to about 40 wt.% X, from about 0 wt.% to about 30 wt.% X, from about 0 wt.% to about 20 wt.% X, from about 0 wt.% to about 10 wt.% X, from about 10 wt.% to about 40 wt.% X, from about 10 wt.% to about 30 wt.% X, from about 10 wt.% to about 20 wt.% X, from about 20 wt.% to about 40 wt.% X, from about 20 wt.% to about 30 wt.% X, or from about 30 wt.% to about 40 wt.% X, based on the total weight of the epoxy-functionalized ethylene copolymer. All individual values and subranges of weight percent X are included and disclosed herein.

In embodiments, Y may be a copolymer unit -(CH₂CR³R⁴)-. In some embodiments, R³ may be hydrogen or methyl. In some embodiments, R⁴ may be carboglycidoxy or glycidoxy. In some embodiments, Y may be selected from the group consisting of glycidyl acrylate, glycidyl methacrylate, glycidyl butyl acrylate, glycidyl vinyl ether, and combinations of two or more of glycidyl acrylate, glycidyl methacrylate, glycidyl butyl acrylate, and glycidyl vinyl ether. In some embodiments, the epoxy-functionalized ethylene copolymer may include from about 0.1 wt.% to about 25 wt.% Y, from about 0.1 wt.% to about 20 wt.% Y, from about 0.1 wt.% to about 15 wt.% Y, from about 0.1 wt.% to about 10 wt.% Y, from about 0.1 wt. % to about 5 wt.% Y, from about 5 wt.% to about 25 wt.% Y, from about 5 wt.% to about 20 wt.% Y, from about 5 wt.% to about 15 wt.% Y, from about 5 wt.% to about 10 wt.% Y, from about 10 wt.% to about 25 wt.% Y, from about 10 wt.% to about 20 wt.% Y, from about 10 wt.% to about 15 wt.% Y, from about 15 wt.% to about 25 wt.% Y, from about 15 wt. % to about 20 wt.% Y, or from about 20 wt.% to about 25 wt.% Y, based on the total weight of the epoxy-functionalized ethylene copolymer. All individual values and subranges of weight percent Y are included and disclosed herein.

In embodiments, Z may be a copolymer derived from comonomers including carbon monoxide, sulfur dioxide, acrylonitrile, or other monomers. In further embodiments, the epoxy-functionalized ethylene copolymer may optionally include from about 0 wt.% to about 10 wt.% Z, from about 0 wt.% to about 8 wt.% Z, from about 0 wt.% to about 6 wt.% Z, from about 0 wt.% to about 4 wt.% Z, from about 0 wt. % to about 2 wt.% Z, from about 2 wt.% to about 10 wt.%, Z from about 2 wt.% to about 8 wt.% Z, from about 2 wt.% to about 6 wt.% Z, from about 2 wt.% to about 4 wt.% Z, from about 4 wt.% to about 10 wt.% Z, from about 4 wt.% to about 8 wt.% Z, from about 4 wt.% to about 6 wt.% Z, from about 6 wt.% to about 10 wt.% Z, from about 6 wt. % to about 8 wt.% Z, or from about 8 wt.% to about 10 wt.% Z, based on the total weight of the epoxy-functionalized ethylene copolymer. All individual values and subranges of weight percent Z are included and disclosed herein.

In embodiments, the modification agent may include an ethylene vinyl acetate glycidyl methacrylate terpolymer; an ethylene n-butyl acrylate glycidyl methacrylate terpolymer; an ethylene methyl acrylate glycidyl methacrylate terpolymer; ethylene-ethyl acrylate copolymer; ethylene-methyl acrylate copolymer; ethylene-butyl acrylate copolymer; acrylic acid modified copolymers; random terpolymers of ethylene; butyl acrylate and maleic anhydride; random terpolymers of ethylene, ethyl acrylate and maleic anhydride; random terpolymers of ethylene, methyl acrylate and glycidyl methacrylate; and copolymers of ethylene and glycidyl methacrylate.

In embodiments, the modification agent may have a melt index (12) as determined by ASTM D1238 (2.16 kg, 190° Celsius), of about 100 g/10 min or less. All individual values and subranges of about 100 g/10 min or less are disclosed and included herein. For example, in one or more embodiments, the modification agent may have a melt index (12) as determined by ASTM D1238 (2.16 kg, 190° Celsius), of about 100 g/10 min or less, about 90 g/10 min or less, 80 g/10 min or less, 70 g/10 min or less, or 60 g/10 min or less. In other embodiments, the modification agent may have a melt index (12) as determined by ASTM D1238 (2.16 kg, 190° Celsius), of from about 2 g/10 min to about 100 g/10 min, from about 2 g/10 min to about 50 g/10 min, from about 2 g/10 min to about 25 g/10 min, from about 2 g/10 min to about 15 g/10 min, from about 2 g/10 min to about 10 grams/10 min, from about 5 g/10 min to about 100 g/10 min, from about 5 g/10 min to about 100 g/10 min, from about 5 g/10 min to about 50 g/10 min, from about 5 g/10 min to about 25 g/10 min, from about 5 g/10 min to about 15 g/10 min, from about 10 g/10 min to about 50 g/10 min, from about 10 g/10 min to about 30 g/10 min, from about 20 g/10 min to about 100 g/10 min, from about 20 g/10 min to about 50 g/10 min, from about 20 g/10 min to about 40 g/10 min, or from about 20 g/10 min to about 30 g/10 min.

In embodiments, the bitumen composition may include one or more additives. The one or more additives may allow the bitumen composition to have improved stability and may influence the rheological properties of the bitumen composition. The one or more additives may allow for the bitumen composition to include crosslinking with sulfur. In embodiments, the one or more additives may include an acid, an anhydride, bitumen softeners, amines, ethylene vinyl acetate, styrene butadiene styrene, and styrene/conjugated diene copolymer. In further embodiments, the one or more additives may include sulfur-based additives. Commercially-available sulfur-based additives may include BGA from Ergon, Inc., which includes hydrotreated naphthenic petroleum oil, elemental sulfur, a rheological additive, and other components.

In embodiments, the bitumen composition may include an acid such as, for example, polyphosphoric acid. In further embodiments, the bitumen composition may include from about 0.05 to about 1 wt.% of an acid, based on the total weight of the bitumen composition. All individual values and subranges of from about 0.05 to about 1 wt.% of an acid are disclosed and incorporated herein. For example, in one or more embodiments, the bitumen composition may include from about 0.05 wt.% to about 1 wt.%, from about 0.05 wt.% to about 0.8 wt.%, from about 0.05 wt.% to about 0.4 wt.%, from about 0.05 wt.% to about 0.2 wt.%, from about 0.2 wt.% to about 1 wt.%, from about 0.2 wt.% to about 0.8 wt.%, or from about 0.6 wt.% to about 0.8 wt.% acid, based on the total weight of the bitumen composition.

In embodiments, the bitumen composition may include an anhydride. In further embodiments, the bitumen composition may include from about 0.05 wt.% to about 1 wt.%, of an anhydride, based on the total weight of the bitumen composition. All individual values and subranges of from about 0.05 to about 1 wt.% of an anhydride are disclosed and incorporated herein. For example, in one or more embodiments, the bitumen composition may include from about 0.05 wt.% to about 1 wt.%, from about 0.05 wt.% to about 0.8 wt.%, from about 0.05 wt.% to about 0.4 wt.%, from about 0.05 wt.% to about 0.2 wt.%, from about 0.2 wt.% to about 1 wt.%, from about 0.2 wt.% to about 0.8 wt.%, or from about 0.6 wt.% to about 0.8 wt.% anhydride, based on the total weight of the bitumen composition.

In embodiments, the bitumen composition may have an elastic recovery of at least 30%. Elastic recovery may be used to measure the percentage by which a sample recovers after tensile deformation using a ductilometer. Without being bound by theory, it is believed a higher percent elastic recovery implies more elastic behavior of the sample after deformation. The elastic recovery may be determined in accordance ASTM D6084. In other embodiments, the bitumen composition may have an elastic recovery of from about 30% to about 90%, from about 30% to about 80%, from about 30% to about 70%, from about 50% to about 90%, from about 50% to about 80%, or from about 50% to about 70%, when measured in accordance with ASTM D6084.

In one or more embodiments, a method of making the bitumen composition comprises mixing the bitumen base, the plurality of synthetic turf fragments, and the modification agent, wherein the modification agent is a reactive thermoplastic interpolymer. In further embodiments, the method of making the bitumen composition may comprise removing an infill material of the synthetic turf prior to mixing with the bitumen base, the plurality of synthetic turf fragments, and the modification agent. Infill material may be removed from the synthetic turf by flipping over the synthetic turf, by shaking the turf while flipped over, or by other methods known in the art. The weight percent of infill material, based on the total weight percent of the synthetic turf, that may be removed from the synthetic turf in order to make the bitumen composition is described above.

In further embodiments, the method of making the bitumen composition may comprise reducing the synthetic turf in size. The synthetic turf may be reduced in size through a process such as shredding, grinding, or chopping, or other process known in the art in order to reduce the synthetic turf into a plurality of synthetic turf fragments and a desired particle size. In embodiments, the plurality of synthetic turf fragments may be less than or equal to 4 cm (i.e., 4 cm is the largest dimension of any shaped synthetic turf fragment). All individual values and subranges of less than or equal to 4 cm are disclosed and included herein. For example, in one or more embodiments, the plurality of synthetic turf fragments may be less than 3 cm, less than 2 cm, less than 1 cm, less than 0.8 cm, less than 0.5 cm, or less than 0.2 cm. In other embodiments, the plurality of synthetic turf fragments may be from 0.01 to 4 cm, 0.05 to 4 cm, 0.01 to 3 cm, 0.1 to 3 cm, 0.01 to 2 cm, 0.01 to 1 cm, 0.01 to 0.8 cm, 0.01 to 0.5 cm, 0.01 to 0.2 cm, 0.02 to 4 cm, 0.2 to 3 cm, 0.2 to 2 cm, 0.2 to 1 cm, 0.2 to 0.8 cm, 0.2 to 0.5 cm, 0.5 to 4 cm, 0.5 to 3 cm, 0.5 to 2 cm, 0.5 to 1 cm, 1 to 4 cm, 1 to 3 cm, or 1 to 2 cm.

In embodiments, the method of making the bitumen composition may comprise heating the bitumen base to from about 150°C to about 200°C so that it may be mixed with the plurality of synthetic turf fragments and the modification agent. All individual values and subranges from about 150°C to about 200°C are disclosed and included herein. For example, in one or more embodiments, the bitumen base may be mixed at a temperature between from about 150°C to about 200°C, from about 150°C to about 190°C, from about 150°C to about 180°C, from about 150°C to about 170°C, from about 160°C to about 200°C, from about 160°C to about 190°C, from about 160°C to about 180°C, from about 160°C to about 170°C, from about 170°C to about 200°C, from about 170°C to about 190°C, from about 170°C to about 180°C, or from about 180°C to about 190°C.

In embodiments, the method of making the synthetic turf may comprise mixing the modification agent, the plurality of synthetic turf fragments, and the bitumen base in combination. In other embodiments, the modification agent, the plurality of synthetic turf fragments or a combination thereof may be mixed with the bitumen base first, and then the plurality of synthetic turf fragments or the modification may be added to the mixture second (if not added in combination).

In embodiments, the method of making the bitumen composition may comprise mixing the bitumen base, the plurality of synthetic turf fragments, and the modification agent for at least about 1 hour. All individual values and subranges of at least about 1 hour are disclosed and included herein. For example, in one or more embodiments, the combination of the bitumen base, the plurality of synthetic turf fragments, and the modification agent may be mixed for at least about 2 hours, or about 3 hours. In other embodiments, the combination of the bitumen base, the plurality of synthetic turf fragments, and the modification agent may be mixed from about 1 hour to about 24 hours, from about 2 hours to about 20 hours, from about 2 to about 16 hours, from about 2 to about 12 hours, from about 2 to about 8 hours, form about 2 to about 4 hours, from about 4 hours to about 16 hours, from about 4 hours to about 12 hours, from about 4 hours to about 8 hours, from about 4 hours to about 6 hours, from about 6 to about 12 hours, from about 6 hours to about 10 hours, or from about 6 hours to about 8 hours.

In embodiments, the method of making the bitumen composition may comprise mixing in additives, acid, or anhydride for from about 0.5 hours to about 2 hours after the bitumen base, the plurality of synthetic turf fragments, and the modification agent have been mixed. All individual values and subranges of from about 0.5 hours to about 2 hours are included and disclosed herein. For example, in one or more embodiments, the additives, acid, or anhydride may be added and mixed for from about 0.5 hours to about 1 hour, from about 1 to about 1.5 hours, or from about 1 hour to about 2 hours.

In embodiments, the method of making the bitumen composition may comprise curing the bitumen composition in an oven at temperatures from about 130 °C to about 180 °C. All individual values and subranges of from about 130 °C to about 180°C are included and disclosed herein. For example, in one or more embodiments, the bitumen composition may be stored in temperatures from about 130 °C to about 180 °C, from about 130 °C to about 170 °C, from about 130 °C to about 160 °C, from about 130 °C to about 150 °C, from about 130 °C to about 140 °C, from about 140 °C to about 170 °C, from about 140 °C to about 160 °C, from about 140 °C to about 150 °C, from about 145 °C to about 165 °C, or from about 150 °C to about 165 °C.

### TEST METHODS

Examples of the bitumen composition are tested according to standard procedures listed in the ASTM. The following abbreviations correspond with test protocols, guidelines, and results presented in Tables below: (1) "SP" Softening Point; (2) "ER" Elastic Recovery Test; (3) "PG" Performance Grade; (4) "δ" Phase Angle; (5) "Visc." Brookfield Viscosity Measured at 135°C; (6) "PG_{RTFOT}" Performance Grade Measured After Rolling Thin Film Oven Test (RTFOT); (7) "δ_{RTFOT}" Phase Angle Measured after Rolling Thin Film Oven Test (RTFOT); (8) "J_{nr,3.2kPa}" Non-recoverable Creep Compliance, measured at 3.2 kPa at 76°C; (9) "MSCR" Multiple Stress Creep Recovery Test.

### Melt Index (12) and Density

Melt Index is measured in accordance with ASTM D1238 at 190° Celsius and 2.16 kg, and is expressed in grams eluted/10 minutes (g/10 min). Density is measured in accordance with ASTM D792, and is express in grams per cubic centimeter (g/cc).

### Softening Point (SP)

Softening point is measured in accordance with ASTM D36, the Standard Test for Softening Point of Bitumen (Ring-and-Ball Apparatus). Softening point is used to measure the temperature at which a bitumen sample can no longer support the weight of a 3.5-g steel ball.

### Elastic Recovery Test (ER)

Elastic recovery is measured in accordance with ASTM D6084, the Standard Test Method for Elastic Recovery of Bituminous Materials by Ductilometer. Elastic recovery is used to measure the percentage a sample recovers after tensile deformation using a ductilometer. It is believed a higher percent elastic recovery implies more elastic behavior of the sample after deformation.

### Performance Grade (PG)

Performance Grade is measured in accordance with ASTM D6373, Specification for Performance Graded Asphalt Binder. Rolling Thin-Film Oven aged samples are studied, and the performance grade is also measured after a Rolling Thin-Oven Aged Test (PG_{RTFOT}).

### Phase Angle (δ)

The phase angel is determined in accordance with ASTM D7175, the Test Method for Determining the Rheological Properties of Asphalt Binder Using a Dynamic Shear Rheometer. The phase angle (δ) may be considered the lag between the applied shear stress and the resulting shear strain. The phase angle is also measured after a Rolling Thin-Oven Aged Test (δ_{RTFOT}).

### Viscosity (Visc.)

The viscosity is determined in accordance with ASTM D4402, the Test Method for Viscosity Determination of Asphalt at Elevated Temperatures Using a Rotational Viscometer.

### Non-recoverable Creep Compliance and Multiple Stress Creep and Recovery

Rolling Thin-Film Oven aged samples are studied using Multiple Stress Creep and Recovery (MSCR) at 67°C in accordance with ASTM D7405. The percent recovery value from the MSCR test is believed to be a measure of the elastic response of the sample. The non-recoverable creep compliance (J_{nr,3.2kPa}) is believed to be an indicator of resistance of the bitumen composition to permanent deformation after repeated exposure to a load of known stress.

### EXAMPLES

The following examples illustrate features of the present disclosure but are not intended to limit the scope of the disclosure. The following experiments analyzed the performance of embodiments of bitumen compositions described herein.

The materials used to produce Comparative Examples and Examples described below included bitumen base sourced from Austria (bitumen penetration grade 70/100), Czech Republic (bitumen penetration grade 70/100), and Saudi Arabia (bitumen penetration grade 60/70); a typical synthetic turf including 8% filaments, primary backing, and secondary backing, 49% stabilizing infill (sand), and 44% performance infill (SBR); and as the modification agent, ELVALOY™ 5160 Copolymer (referred hereinafter as the "Modif. Agent"), a reactive thermoplastic interpolymer and an epoxy-functionalized ethylene copolymer, sourced from Dow Chemical Inc. (Midland, MI) having a melt index (12) of 12 g/10 min ASTM D1238 (2.16 kg, 190 Celsius), a density of 0.950 g/cc, and a glycidyl methacrylate content in the range of about 4 to about 9 weight %.

To make the Comparative Examples and Examples described below, the majority of stabilizing infill material is removed from the synthetic turf by flipping the synthetic turf over. The synthetic turf is reduced in size using a Colortronic M103 granulator. The granulated synthetic turf is passed through an 8 mm and 2 mm screen for collecting a plurality of synthetic turf fragments ranging in size from about 8 mm to about 2 mm. The bitumen base is poured into a conventional mixing can with a lid, and the lid and mixer assembly are attached to the can. While mixing the bitumen base, the conventional mixing can is heated to about 185°C, and once the temperature is stabilized, the Modif. Agent and plurality of synthetic turf fragments are added. The combination of the bitumen base, the Modif. Agent, and the plurality of synthetic turf fragments is mixed at a rate of at least 500 rpm to permit the components to visually dissolve. For each example, the combination of the bitumen base, the Modif. Agent, and the plurality of synthetic turf fragments is permitted to mix for the number of hours indicated in Table 1 below. Example 7, as denoted in Table 1 below, is cured in a conventional oven at 165°C for 16 hours after mixing.

The country source and the penetration grade of the bitumen base of each sample is reported in Table 1. Table 1 also includes the wt.% of the bitumen base, the Modif. Agent, and the plurality of synthetic turf fragments, based on total weight of the example, as well as the mixing time for making each example.

**Table 1. Compositions of Comparative Examples 1-3 and Examples 1-8.**

| **SAMPLE** | **Country Source** | **Penetration Grade** | **Bitumen Base (wt.%)** | **Plurality of Synthetic Turf Fragments (wt.%)** | **Modif. Agent (wt.%)** | **Mixing Time (hours)** |
|---|---|---|---|---|---|---|
| **Comparative Example 1** | Austria | 70/100 | 95.00 | 5.00 | 0 | 3 |
| **Comparative Example 2** | Austria | 70/100 | 92.00 | 8.00 | 0 | 3 |
| **Comparative Example 3** | Czech Rep. | 70/100 | 90.00 | 10.00 | 0 | 7 |
| **Example 1** | Austria | 70/100 | 94.50 | 5.00 | 0.50 | 7 |
| **Example 2** | Austria | 70/100 | 93.50 | 5.00 | 1.50 | 7 |
| **Example 3** | Austria | 70/100 | 91.50 | 8.00 | 0.50 | 7 |
| **Example 4** | Austria | 70/100 | 90.50 | 8.00 | 1.50 | 7 |
| **Example 5** | Czech Rep. | 70/100 | 89.00 | 10.00 | 1.00 | 7 |
| **Example 6** | Czech. Rep. | 70/100 | 88.50 | 10.00 | 1.50 | 7 |
| **Example 7** | Saudi Arabia | 60/70 | 93.50 | 5.00 | 1.50 | 8* |
| **Example 8** | Saudi Arabia | 60/70 | 93.50 | 5.00 | 1.50 | 8 |

| | | | | | | |
|---|---|---|---|---|---|---|
| * Cured in a conventional oven at 165°C for 16 hours after mixing. | | | | | | |

The softening point (SP) and the elastic recovery (ER) of Comparative Examples 1-3 and Examples 1-6 are measured by the methods previously described. The softening point and the elastic recovery measurements for Comparative Examples 1-3 and Examples 1-6 are provided in Table 2.

**Table 2. SP and ER results for Comparative Examples 1-3 and Examples 1-6.**

| **SAMPLE** | **Penetration Grade** | **Plurality of Synthetic Turf Fragments (wt.%)** | **Modif. Agent (wt.%)** | **SP (°C)** | **ER (%)** |
|---|---|---|---|---|---|
| **Comparative Example 1** | 70/100 | 5.00 | 0 | 51.5 | 10.0 |
| **Comparative Example 2** | 70/100 | 8.00 | 0 | 55.9 | Sample Broke |
| **Comparative Example 3** | 70/100 | 10.00 | 0 | 104.9 | Sample Broke |
| **Example 1** | 70/100 | 5.00 | 0.50 | 54.5 | 39.5 |
| **Example 2** | 70/100 | 5.00 | 1.50 | 57.7 | 59.5 |
| **Example 3** | 70/100 | 8.00 | 0.50 | 63.0 | 41.0 |
| **Example 4** | 70/100 | 8.00 | 1.50 | 65.0 | 57.0 |
| **Example 5** | 70/100 | 10.00 | 1.00 | 61.2 | 51.0 |
| **Example 6** | 70/100 | 10.00 | 1.50 | 67.4 | Sample Broke |

The PG, δ, PG_{RTFO}, δ_{RTFO}, J_{nr,3.2kPa,} and Multiple Stress Creep and Recovery (MSCR) are measured for Comparative Example 3 and Examples 5-6 according to the test methods previously described and as indicated in Table 3 below. The test results reported in Table 3 correspond to the performance specifications according to ASTM D6373 - 16 Standard Specification for Performance Graded Asphalt Binder - PG.

**Table 3. PG, δ, PG_{RTFO}, δ_{RTFO}, J_{nr,3.2kPa}, and Multiple Stress Creep and Recovery (MSCR) results for Comparative Example 3 and Examples 5-6.**

| **SAMPLE** | **SP** (°C) | **ER** (%) | **PG** (°C) | δ (°) | **PG_{RTFO}** (°C) | **δ_{RTFO} (°)** | **Jnr (kPa⁻¹) 3.2kPa** | **MSCR at 76°C** |
|---|---|---|---|---|---|---|---|---|
| **Comparative Example 3** | 104.9 | Sample Broke | 92.8 | 71.8 | 85.7 | 76.2 | 1.688 | Heavy |
| **Example 5** | 61.2 | 51.0 | 80.2 | 75.4 | 77.3 | 74.9 | 3.244 | Standard |
| **Example 6** | 67.4 | Sample Broke | 87.6 | 74.7 | 85.3 | 62.1 | 0.950 | Very Heavy |

The Viscosity, PG, δ, PG_{RTFO}, δ_{RTFO}, J_{nr,3.2kPa,} and Multiple Stress Creep and Recovery (MSCR) are measured for Examples 7-8 according to the test methods previously described and as indicated in Table 4. The test results in Table 4 correspond to the performance specifications according to ASTM D6373 - 16 Standard Specification for Performance Graded Asphalt Binder - PG.

**Table 4. Visc., PG, δ, PG_{RTFO}, δ_{RTFO}, J_{nr,3.2kPa}, and Multiple Stress Creep and Recovery (MSCR) results for Examples 7-8.**

| **SAMPLE** | **Visc. (mPa·s)** | **PG** (°C) | δ (°) | **PG_{RTFO}** (°C) | **δ_{RTFO} (°)** | **Jnr (kPa⁻¹) 3.2kPa** | **MSCR at 76°C** |
|---|---|---|---|---|---|---|---|
| **Example 7** | 1.962 | 80.1 | 80.4 | 77.9 | 77.7 | 2.982 | Standard |
| **Example 8** | 1.578 | 77.5 | 83.1 | 75.3 | 80.4 | 4.272 | Fail |

As shown in Table 2, Examples 1-5 have a higher Softening Point and higher Elastic Recovery (%) than Comparative Example 1. The samples of Comparative Example 2 and Comparative Example 3 broke during testing for Elastic Recovery. Although Example 3 broke during testing for Elastic Recovery, the combination of the constituents for the bitumen composition of Examples 1-8 are sufficient to meet standard requirements of certain countries.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, if any, including any cross- referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A bitumen composition comprising:
a bitumen base in about 70 weight % to about 99.8 weight %, based on total weight of the bitumen composition;
a plurality of synthetic turf fragments in about 0.10 weight % to about 20 weight %, based on total weight of the bitumen composition;
a modification agent in about 0.10 weight % to about 10 weight %, based on total weight of the bitumen composition, wherein the modification agent is a reactive thermoplastic interpolymer.

2. The bitumen composition of claim 1, wherein the reactive thermoplastic interpolymer comprises from about 0.1 to about 25 weight % glycidyl methacrylate.

3. The bitumen composition of claim 1-2, wherein the reactive thermoplastic interpolymer is an epoxy-functionalized ethylene copolymer having the formula E/X/Y/Z,
wherein E is the copolymer unit -(CH₂CH₂)- derived from ethylene;
X is the copolymer unit -(CH₂CR¹R²)-, where R¹ is hydrogen, methyl, or ethyl, and R² is carboalkoxy, acyloxy, or alkoxy of 1 to 10 carbon atoms, present in from 0 to about 40 weight % of the copolymer;
Y is the copolymer unit -(CH₂CR³R⁴)-, where R³ is hydrogen or methyl, and R⁴ is carboglycidoxy or glycidoxy, present in from 0.1 to about 25 weight % of the copolymer;
Z is the copolymer derived from comonomers including carbon monoxide, sulfur dioxide, acrylonitrile, or other monomers, present in from 0 to about 10 weight % of the copolymer.

4. The bitumen composition of claim 4, wherein Y is selected from the group consisting of glycidyl acrylate, glycidyl methacrylate, glycidyl butyl acrylate, glycidyl vinyl ether, and combinations of two or more of glycidyl acrylate, glycidyl methacrylate, glycidyl butyl acrylate, and glycidyl vinyl ether.

5. The bitumen composition of claim 1-2, wherein the reactive thermoplastic interpolymer is an epoxy-functionalized copolymer having a melt index (12) from 5 g/10 min to 15 g/10 min, when measured according to ASTM D1238 (2.16 kg, 190°C).

6. The bitumen composition of any preceding claim, further comprising one or more of the following: (1) an acid; (2) an anhydride; (3) bitumen softeners; (4) amines; (5) ethylene vinyl acetate; (6) styrene butadiene styrene; and (7) styrene/conjugated diene copolymer.

7. The bitumen composition of any preceding claim, further comprising polyphosphoric acid.

8. The bitumen composition of any preceding claim, further comprising from about 0.05 to about 1 weight % of an acid or anhydride, based on the total weight of the bitumen composition.

9. The bitumen composition of any preceding claim, wherein the reactive thermoplastic interpolymer has a density from about 0.900 g/cc to about 0.970 g/cc; and wherein the bitumen composition has an elastic recovery of from 30% to 90%, and comprises from about 0.10 weight % to about 10 weight % of the plurality of synthetic turf fragments and from about 0.25 weight % to about 1.25 weight % of the reactive thermoplastic interpolymer.

10. A method of making a bitumen composition comprising:
mixing a bitumen base, a plurality of synthetic turf fragments, and a modification agent, wherein the modification agent is a reactive thermoplastic interpolymer.
